# EUROPÄISCHE PATENTANMELDUNG

(11) **EP 3 396 453 A1**
(43) Veröffentlichungstag der Anmeldung: **31.10.2018**
(21) Anmeldenummer: 17168739.5
(22) Anmeldetag: 28.04.2017
(51) Int. Cl.: G03B 21/00, F24C 7/08, F24C 15/10

(54) **KOCHFELD, VERFAHREN ZUR POSITIONSERFASSUNG EINES KOCHGEFÄSSES AUF EINEM SOLCHEN KOCHFELD UND VERFAHREN ZUR PROJEKTION VON LICHT**

(71) Anmelder: E.G.O. Elektro-Gerätebau GmbH, 75038 Oberderdingen (DE)
(72) Erfinder: Heckert, Eva, 76703 Kraichtal (DE); Ose, Dr. Lutz, 75447 Sternenfels (DE); Schaumann, Uwe, 75038 Oberderdingen (DE); Seidler, Christian, 75015 Bretten (DE); Thimm, Dr. Wolfgang, 76137 Karlsruhe (DE)
(74) Vertreter: Patentanwälte Ruff, Wilhelm, Beier, Dauster & Partner mbB

(57) **Zusammenfassung**

Ein Kochfeld mit einer Kochfeldplatte, mehreren Heizeinrichtungen unter der Kochfeldplatte und einer Kochfeldsteuerung weist in den Eckbereichen jeweils eine turmartige Projektionsvorrichtung auf, um oberhalb einer Ebene der Kochfeldplatte eine optische Projektion auf eine Lateralseite eines auf die Kochfeldplatte aufgestellten Kochgefäßes zu projizieren. Die Projektionsvorrichtung weist ein Projektionsgehäuse auf, das in einer Arbeitsposition über die Ebene der Kochfeldplatte nach oben übersteht, eine Spiegeleinrichtung sowie Leuchtmittel. Die Spiegeleinrichtung ist als MEMS-Vorrichtung ausgebildet und ist dazu ausgebildet, um in der Arbeitsposition von den Leuchtmitteln ausgestrahltes Licht oberhalb der Kochfeldplatte auf Lateralseite eines Kochgefäßes zu projizieren.

## Beschreibung

### Anwendungsgebiet und Stand der Technik

Die Erfindung betrifft ein Kochfeld sowie Verfahren zur Erfassung der Position eines Kochgefäßes an einem solchen Kochfeld und Verfahren zur Projektion von Licht, beispielsweise auf ein Kochgefäß auf einem solchen Kochfeld.

Es sind Kochfelder der Marke Siemens bekannt, bei denen in den hinteren Eckbereichen kleine ausfahrbare Türme eingebaut sind, die IR-Sensoren enthalten. Die IR-Sensoren können bei ausgefahrenen Türmen auf die Lateralseiten von auf die Kochfeldplatte aufgestellten Kochgefäßen gerichtet sein und eine dort abgestrahlte Wärmestrahlung erfassen, um so eine Messung der Temperatur dieser Kochgefäße zu ermöglichen. Dabei müssen diese Lateralseiten der Kochgefäße ggf. speziell ausgebildet sein, um die Temperaturmessung zu ermöglichen.

### Aufgabe und Lösung

Der Erfindung liegt die Aufgabe zugrunde, ein eingangs genanntes Kochfeld sowie eingangs genannte Verfahren zur Erfassung der Position eines Kochgefäßes an einem solchen Kochfeld und zur Projektion von Licht zu schaffen, mit denen Probleme des Standes der Technik gelöst werden können und es insbesondere möglich ist, auf vorteilhafte Art und Weise ein Kochfeld mit weiteren Funktionen zu versehen, insbesondere eine Position eines Kochgefäßes an einem solchen Kochfeld gut erfassen zu können und Licht darauf projizieren zu können.

Gelöst wird diese Aufgabe durch ein Kochfeld mit den Merkmalen des Anspruchs 1 sowie Verfahren zur Erfassung der Position eines Kochgefäßes an einem solchen Kochfeld mit den Merkmalen des Anspruchs 8 oder 9 und Verfahren mit den Merkmalen des Anspruchs 11 oder 12. Vorteilhafte sowie bevorzugte Ausgestaltungen der Erfindung sind Gegenstand der weiteren Ansprüche und werden im Folgenden näher erläutert. Dabei werden manche der Merkmale nur für das Kochfeld oder nur für eines der Verfahren beschrieben. Sie sollen jedoch unabhängig davon sowohl für das Kochfeld als auch für die Verfahren selbständig und unabhängig voneinander gelten können. Der Wortlaut der Ansprüche wird durch ausdrückliche Bezugnahme zum Inhalt der Beschreibung gemacht.

Es ist vorgesehen, dass das Kochfeld eine Kochfeldplatte, mehrere Heizeinrichtungen unter der Kochfeldplatte und eine Kochfeldsteuerung aufweist. Diese können im Prinzip gemäß dem bekannten Stand der Technik ausgebildet sein und wenige Besonderheiten aufweisen. Insbesondere kann eine Kochfeldplatte aus Glaskeramik oder Hartglas bestehen. Heizeinrichtungen können übliche Induktionsheizspulen oder Strahlungsheizeinrichtungen sein. Eine Kochfeldsteuerung kann unter der Kochfeldplatte angeordnet sein. Sie ist vorteilhaft mit Berührungsschaltern versehen bzw. kann als sogenannte Touchcontrol ausgebildet sein.

Das Kochfeld weist mindestens eine Projektionsvorrichtung auf, um oberhalb einer Ebene der Kochfeldplatte eine optische Projektion auf eine Lateralseite eines auf die Kochfeldplatte aufgestellten Kochgefäßes oder auf eine andere Projektionsfläche zu projizieren, vorteilhaft im Bereich benachbart oder nahe zum Kochfeld. Eine Projektionsrichtung der Projektionsvorrichtung ist vorteilhaft in etwa horizontal bzw. parallel zur Kochfeldplatte oder von der Projektionsvorrichtung zu einem seitlich daneben aufgestellten Kochgefäß oder einer anderen nahe angeordneten Projektionsfläche. So kann eine optische Projektion auf eine Lateralseite eines aufgestellten Kochgefäßes oder die Projektionsfläche projiziert werden, die neben einem reizvollen optischen Effekt auch Informationen an einen Benutzer vermitteln kann, beispielsweise über einen Betriebszustand am Kochfeld. Insbesondere kann es ein Betriebszustand sein, der gerade dieses Kochgefäß betrifft, auf das projiziert wird.

Die Projektionsvorrichtung weist ein Projektionsgehäuse auf, das auch als Projektionskopf angesehen werden kann. Das Projektionsgehäuse steht in einer Arbeitsposition über die Ebene der Kochfeldplatte nach oben, überragt die Kochfeldplatte also. Vorteilhaft überragt es die Kochfeldplatte um einige cm, beispielsweise 1 cm bis 10 cm. Die Projektionsvorrichtung weist in dem Projektionsgehäuse bzw. Projektionskopf eine Spiegeleinrichtung sowie Leuchtmittel auf. Die Spiegeleinrichtung ist dazu ausgebildet, um Licht, das in der Arbeitsposition von den Leuchtmitteln ausgestrahlt wird, oberhalb der Kochfeldplatte auf die Lateralseite des Kochgefäßes oder die Projektionsfläche zu projizieren. Dazu ist die Spiegeleinrichtung erfindungsgemäß als MEMS-Vorrichtung ausgebildet. Durch die Spiegeleinrichtung ist es dabei vor allem vorteilhaft möglich, das Licht der Leuchtmittel an eine gewünschte Stelle zu lenken bzw. zu projizieren. So ist es möglich, dass die Leuchtmittel fest oder nur in einer Ebene bewegbar im Projektionsgehäuse angeordnet sind und die Spiegeleinrichtung die Lichtstrahlen auf gewünschte Art und Weise lenkt.

Derartige MEMS-Vorrichtungen zum Spiegeln von Licht bzw. zum Projizieren sind beispielsweise von einer Fa. Maradin Ltd. aus Israel bekannt und können dort bezogen werden.

Dementsprechend wird auch auf die ältere deutsche Patentanmeldung der Anmelderin DE 102015222719 A1 verwiesen. Licht kann mittels dieser speziellen Spiegeleinrichtung bzw. MEMS-Vorrichtung wie von einem einachsig oder mehrachsig bewegbaren Spiegel mit großem Bewegungsgrad projiziert werden. Insbesondere kann damit sozusagen mittels eines Lichtstrahls oder Lichtpunkts, der von einer sehr lichtintensiven Quelle wie beispielsweise einem Laser, einer Laserdiode oder starken LED kommt, eine Art Bild, nämlich das Projektionsbild, Punkt für Punkt erstellt werden. Auf bekannte Art und Weise werden dabei die Leuchtmittel zusammen mit der Spiegeleinrichtung angesteuert. Wenn mehrfarbige Leuchtmittel vorgesehen sind, kann auch ein entsprechendes mehrfarbiges Bild erzeugt werden.

In vorteilhafter Ausgestaltung der Erfindung ist die Spiegeleinrichtung in der genannten Arbeitsposition im Projektionsgehäuse bzw. mit dem Projektionsgehäuse oberhalb der Ebene der Kochfeldplatte angeordnet. So kann sie in einem flachen Winkel oder im Wesentlichen horizontal Licht auf eine Lateralseite eines aufgestellten Kochgefäßes oder eine sonstige Projektionsfläche projizieren bzw. umlenken.

Vorteilhaft sind die Leuchtmittel in dem Projektionsgehäuse unterhalb der Spiegeleinrichtung angeordnet. Auch wenn sie grundsätzlich darüber oder daneben angeordnet sein könnten, so werden sie vorteilhaft darunter angeordnet. So weist die MEMS-Vorrichtung bzw. die Spiegeleinrichtung im Projektionsgehäuse die höchste Position auf. So kann eine Bauhöhe bzw. ein Überstand über die Kochfeldplatte nach oben reduziert werden.

Vorteilhaft ist ein Abstand von den Leuchtmitteln zu der Spiegeleinrichtung darüber nicht sehr groß. So kann die eigentliche Spiegelfläche bzw. aktive Fläche der Spiegeleinrichtung relativ klein gehalten werden. Der Abstand liegt vorteilhaft unter 3 cm, besonders vorteilhaft beträgt er maximal 1 cm.

In einer Ausgestaltung der Erfindung kann das Projektionsgehäuse drehbar ausgebildet werden, um so das von der Spiegeleinrichtung gespiegelte bzw. projizierte Licht der Leuchtmittel an unterschiedliche mögliche Positionen für ein Kochgefäß auf der Kochfeldplatte oder an die sonstige Projektionsfläche zu bringen. Mit dem Projektionsgehäuse dreht sich dann auch die Spiegeleinrichtung, möglicherweise drehen sich auch die Leuchtmittel entsprechend mit, so dass sich das gesamte Projektionsgehäuse dreht. In diesem Fall kann auch ein relativ kleines Fenster im Projektionsgehäuse vor der Spiegeleinrichtung ausreichend sein, da der Öffnungswinkel für das gespiegelte bzw. projektierte Licht üblicherweise nicht sehr groß ist und der Abstand relativ gering ist.

Alternativ kann das Projektionsgehäuse nicht drehbar ausgebildet sein bzw. es wird nicht gedreht. Ein Fenster im Projektionsgehäuse zum Durchlassen des Lichts bzw. der Strahlen von der Spiegeleinrichtung kann dann etwas breiter sein, um den möglichen Bereich bzw. Winkelbereich abzudecken, in dem die Spiegeleinrichtung das Licht der Leuchtmittel spiegelt bzw. projiziert. Ein solches Fenster kann über einen Bogenwinkel von mehr als 90° verlaufen, vorteilhaft bis 110° oder 130°. Wenn die Projektionsvorrichtung bzw. das Projektionsgehäuse nicht drehbar ausgebildet sein muss, kann der mechanische Aufwand sowie auch der Steuerungsaufwand erheblich geringer gehalten werden. Des Weiteren ist es so möglich, zumindest in einem begrenzten Bereich mit einer einzigen Projektionsvorrichtung bzw. einer einzigen Spiegeleinrichtung an mehrere unterschiedliche bzw. räumlich voneinander entfernte Bereiche etwas zu projizieren. Die genannte MEMS-Vorrichtung kann die gewünschte breite Streuung bzw. Spiegelung der Lichtstrahlen erreichen.

In alternativer Ausgestaltung zu einem vorgenannten breiten Fenster für Licht von und zu der Spiegeleinrichtung können auch mindestens zwei separate und lichtdurchlässige Fenster vorgesehen sein. So kann ein Fenster für eine Projektion der Leuchtmittel und ein Fenster für eine Temperaturerfassung vorgesehen sein, wie sie noch nachstehend beschrieben wird.

In nochmals weiterer Ausgestaltung der Erfindung kann für eine einfach ausgestaltete Projektionsvorrichtung eine Drehbarkeit des Projektionsgehäuses auch manuell ausgebildet sein. Dies bietet sich vor allem bei manuell versenkbaren und anhebbaren Projektionsgehäusen an. So kann auf einen Teil der aufwändigen und störungsanfälligen Elektromechanik verzichtet werden. Des Weiteren kann ein Benutzer sehr einfach mit ausreichender Genauigkeit, beispielsweise durch einen außen angebrachten Index, das Projektionsgehäuse dorthin ausrichten, wohin eine Projektion gewünscht ist. Dies kann auch eine Position eines aufgestellten Kochgefäßes sein.

Die Leuchtmittel sind dazu ausgebildet, von einer Kochfeldsteuerung oder einer separaten Steuerung für die Projektionsvorrichtung entsprechend im Zusammenspiel mit der Spiegeleinrichtung angesteuert zu werden.

In weiterer Ausgestaltung der Erfindung ist unterhalb der Spiegeleinrichtung ein Temperaturerfassungsmittel vorgesehen. Damit kann eine Temperatur optisch erfasst werden, in diesem Fall die Temperaturen von auf die Kochfeldplatte aufgestellten Kochgefäßen. Hierfür kann vorteilhaft ein IR-Sensor verwendet werden. Mit der optischen Temperaturerfassung kann in der Arbeitsposition der Projektionsvorrichtung bzw. des Projektionsgehäuses Wärmestrahlung, die von einer Lateralseite eines auf die Kochfeldplatte aufgestellten Kochgefäßes abgestrahlt wird, über die Spiegeleinrichtung an das Temperaturerfassungsmittel geleitet bzw. gespiegelt werden. So kann die Temperatur der Lateralseite des aufgestellten Kochgefäßes und damit auch die Temperatur des Kochgefäßes an sich im unteren Bereich gut und einfach erfasst werden. Eine derartige optische Temperaturerfassung kann an sich erfolgen wie im eingangs genannten Stand der Technik beschrieben, es wird lediglich die ankommende IR-Strahlung bzw. Wärmestrahlung über die erfindungsgemäße MEMS-Vorrichtung an das Temperaturerfassungsmittel gelenkt. Das Temperaturerfassungsmittel bzw. der IR-Sensor ist dabei vorteilhaft nahe bei den eingangs genannten Leuchtmitteln angeordnet. Möglicherweise ist auch ein paralleler bzw. abwechselnder oder Intervall-Betrieb derart möglich, dass eine Projektion der Leuchtmittel kurz unterbrochen wird für eine Temperaturerfassung an der Lateralseite des Kochgefäßes. Dies kann derart schnell gehen, dass es für ein Benutzer nicht bemerkbar ist bzw. nicht oder nur unwesentlich auffällt. Es ist also möglich, die genannte Projektion von Licht bzw. von den Leuchtmitteln auf eine Lateralfläche eines Kochgefäßes oder in einen ähnlichen Bereich zusätzlich zu der bekannten und zuverlässigen Temperaturerfassung eines Kochgefäßes vorzusehen.

In vorteilhafter weiterer Ausgestaltung der Erfindung ist es möglich, dass das Kochfeld mehrere Projektionsvorrichtungen aufweist. Vorteilhaft sind sie identisch. Ist ein Kochfeld rechteckig ausgebildet, so ist bevorzugt jeweils eine Projektionsvorrichtung in jedem der beiden hinteren Eckbereiche vorgesehen. Dort stören sie beim Kochen nicht. Zusätzlich kann besonders bevorzugt vorgesehen sein, in einem oder in beiden vorderen Eckbereichen eine Projektionsvorrichtung vorzusehen. Der Vorteil einer vorne angeordneten Projektionsvorrichtung besteht darin, dass eine Projektion auf eine Lateralseite eines Kochgefäßes für einen vor dem Kochfeld stehenden Benutzer besonders gut sichtbar ist. Eine derartige Projektion kann allgemein eine Beleuchtung zur Darstellung eines Aktivierungszustands sein, alternativ können bestimmte Bilder, Symbole odgl. dargestellt werden.

Anstelle auf eine Lateralseite eines auf die Kochfeldplatte aufgestellten Kochgefäßes kann eben auch auf eine Wand hinter dem Kochfeld als Projektionsfläche etwas projiziert werden. Dies können beispielsweise Bediensymbole, Zustandsanzeigen oder auch komplexe Inhalte wie Kochrezepte oder Anleitungen sein.

Wenn das Projektionsgehäuse nicht drehbar ausgestaltet ist, so ist eine Spiegeleinrichtung vorteilhaft so ausgebildet, dass sie in etwa auf einen Mittelbereich der Kochfeldplatte ausgerichtet ist. Wenn eine Projektionsvorrichtung in einem Eckbereich des Kochfelds angeordnet ist, so ist dies die ungefähre grobe Richtung, in der von dem Projektionsgehäuse ausgehend ein Kochgefäß aufgestellt sein wird.

In vorteilhafter Ausgestaltung der Erfindung kann eine Projektionsvorrichtung bzw. ein Projektionsgehäuse höhenverstellbar ausgebildet sein. So kann es einerseits in einer Parkposition sein, in der es nicht über eine Ebene der Kochfeldplatte nach oben steht. Besonders vorteilhaft ist das Projektionsgehäuse dabei, insbesondere mit einer Oberseite, in etwa oberflächenbündig mit der Kochfeldplatte. In einer vorgenannten Arbeitsposition steht das Projektionsgehäuse über die Ebene der Kochfeldplatte nach oben über. Dieser Überstand kann einige cm betragen, beispielsweise 1 cm bis 5 cm oder sogar 10 cm. Ein Betrieb in einer zwischenliegenden Position ist vorteilhaft nicht vorgesehen, so dass eine Steuerung für die Projektionsvorrichtung bzw. eine Kochfeldsteuerung stets weiß, in welcher Höhe genau die Lichtstrahlen umgelenkt werden bzw. sich dementsprechend die Spiegeleinrichtung bzw. die MEMS-Vorrichtung befindet. Eine Höhenverstellbarkeit kann beispielsweise über kleine Elektromotoren und Linearantrieb erfolgen, alternativ mittels Elektromagnet.

In nochmals weiterer Ausgestaltung der Erfindung kann eine Höhenverstellbarkeit der Projektionsgehäuse sozusagen manuell unterstützt durch Federkraft ausgebildet sein. So kann beispielsweise bei einem versenkten Projektionsgehäuse durch leichten Druck von oben mit einem Finger eine Rastsperre überwunden werden, woraufhin das Projektionsgehäuse von einer Feder nach oben gedrückt wird von der Parkposition in die Arbeitsposition. Durch einen erneuten Druck mittels eines Fingers kann das Projektionsgehäuse von der Arbeitsposition wieder in die Parkposition versenkt werden.

Erfindungsgemäß kann in einer Ausgestaltung eines Verfahrens der Erfindung eine Position eines Kochgefäßes an einem Kochfeld mit einer solchen Projektionsvorrichtung dadurch erfasst werden, dass Licht von den Leuchtmitteln mittels der Spiegeleinrichtung oberhalb der Kochfeldplatte ausgestrahlt wird. Dieses Licht kann in einem Lichtkegel oder einem Lichtfächer mit einer gewissen Breite ausgestrahlt werden. Sobald Licht auf eine Lateralseite eines auf die Kochfeldplatte aufgestellten Kochgefäßes trifft und davon reflektiert wird und wieder zurückfällt in das Projektionsgehäuse und von der Spiegeleinrichtung auf einen entsprechenden Lichtempfänger gespiegelt wird, kann aus der bekannten Richtung, in welche das gespiegelte Licht ausgestrahlt worden ist, ausgehend von der bekannten Position des Projektionsgehäuses ein Kochgefäß zumindest entlang einer Linie als erkannt bestimmt werden. Dann kann entweder mittels einer Laufzeitmessung für das Licht eine Entfernung zu dem Kochgefäß ermittelt werden, wie dies an sich bekannt ist. Alternativ kann die Entfernung über Interferenzmuster zwischen verschiedenen Wellenlängen der Leuchtmittel ermittelt werden, so die Laufzeitmessung indirekt durchgeführt wird.

In einer nochmals weiteren Alternative kann eine solche Entfernungsmessung oder Laufzeitmessung unterbleiben, dafür aber mittels eines anderen Projektionsgehäuses derselbe Vorgang durchgeführt werden, bis ausgesandtes Licht reflektiert wird und so das Vorhandensein eines Kochgefäßes erkannt worden ist. Über eine an sich bekannte Triangulation kann dann ebenfalls die Position des Kochgefäßes auf der Kochfeldplatte ermittelt werden. Über bestimmte Plausibilitätskriterien kann dabei erfasst werden, ob die beiden Projektionsvorrichtungen auch wirklich dasselbe Kochgefäß erfasst haben. Hier kann es möglich sein, dass mittels einer nochmals weiteren Projektionsvorrichtung geprüft wird, ob die bestimmte Position des Kochgefäßes korrekt ist.

Da Kochgefäße üblicherweise außen rund oder abgerundet sind, kann der Umstand genutzt werden, dass nur dann Licht von dem Kochgefäß zurückreflektiert wird an den Ort des Aussendens bzw. die Spiegeleinrichtung, wenn es quasi senkrecht auf dessen Außenwand trifft bzw. in Richtung auf dessen Mittelpunkt, falls es kreisrund ist. Damit ist eine Erkennung eines Kochgefäßes genau möglich, sobald überhaupt reflektiertes Licht erfasst worden ist. Somit kann bei kreisrunden Kochgefäßen davon ausgegangen werden, dass deren Mittelpunkt entlang einer Geraden liegt, welche dem Lichtweg entspricht bei Erfassen von reflektiertem Licht.

Wenn mehrere Projektionsgehäuse bzw. Projektionsvorrichtungen gleichzeitig aktiv sind, um eine Kochfeldplatte nach aufgestellten Kochgefäßen abzusuchen, so arbeiten sie vorteilhaft entweder zeitversetzt, um sich nicht gegenseitig mit reflektierten Lichtsignalen zu stören. Alternativ können sie unterschiedliche bzw. verschieden codierte Lichtsignale verwenden, um eine Unterscheidung zu ermöglichen. Dies ist aber grundsätzlich bekannt und für den Fachmann ohne größere Schwierigkeiten umsetzbar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine seitliche Schnittdarstellung durch ein erfindungsgemäßes Kochfeld mit einer Projektionsvorrichtung neben einem aufgestellten Topf,
- Fig. 2: eine schematische Draufsicht auf die Projektionsvorrichtung aus Fig. 1 von oben und
- Fig.3: eine Draufsicht auf ein Kochfeld entsprechend Fig. 1 von oben mit zwei aufgestellten Töpfen und einer Projektionsvorrichtung in jedem Eckbereich.

### Detaillierte Beschreibung der Ausführungsbeispiele

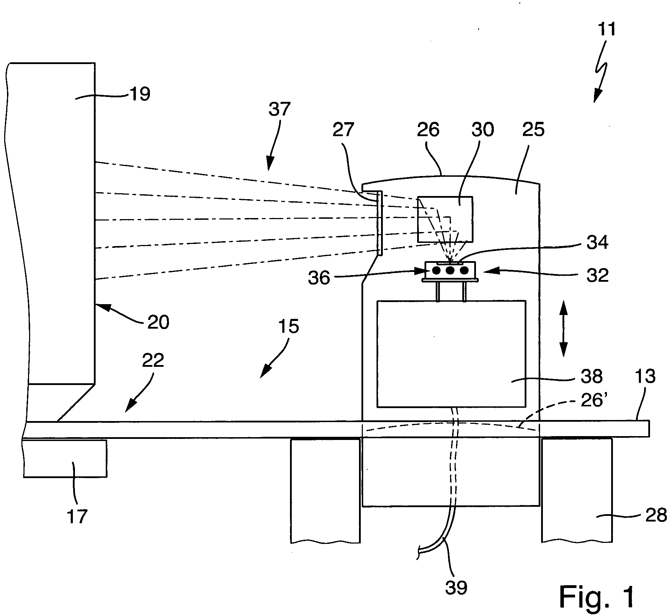

In der Fig. 1 ist ein erfindungsgemäßes Kochfeld 11 ausschnittsweise dargestellt in einer Art seitlichen Schnittdarstellung. Das Kochfeld 11 weist eine Kochfeldplatte 13 auf, vorteilhaft im Wesentlichen ausgebildet wie üblich aus Glaskeramik oder Hartglas. Am Kochfeld 11 ist ein Heizbereich 15 auf an sich bekannte Art und Weise ausgebildet. Hier können Kochgefäße bzw. Töpfe aufgestellt und beheizt werden. Im Heizbereich 15 befindet sich unterhalb der Kochfeldplatte 13 eine Heizeinrichtung 17, welche eine Strahlungsheizeinrichtung oder eine Induktionsheizeinrichtung sein kann. Insbesondere kann das Kochfeld 11 eine Vielzahl solcher Heizeinrichtungen 17 aufweisen, beispielsweise 8 bis 15 oder 20, wodurch es ermöglicht wird, dass an im Wesentlichen beliebiger Stelle ein Topf 19 aufgestellt werden kann und dann dort durch eine oder mehrere Heizeinrichtungen 17 sehr gut bzw. optimal beheizt wird. Dies ist grundsätzlich bekannt.

Der Topf 19 ist auf die Kochfeldplatte 13 oberhalb der Heizeinrichtung 17 aufgestellt, wodurch eine Kochstelle 22 gebildet wird. Hier kann der Topf 19 mittels der Heizeinrichtung 17 beheizt werden. Nahe bei dem Topf 19, wobei die Entfernung auch größer sein könnte, ist eine erfindungsgemäße Projektionsvorrichtung 24 am Kochfeld 11 vorgesehen. Sie weist ein Projektionsgehäuse 25 auf, das sich turmartig mit einer leicht gerundeten Oberseite 26 über die Kochfeldplatte 13 bzw. deren Ebene nach oben erstreckt. Somit ist hier in Fig. 1 die Arbeitsposition der Projektionsvorrichtung 24 dargestellt. Sie kann in der Praxis zwischen 2 cm und 10 cm über die Ebene der Kochfeldplatte 13 nach oben ragen. Des Weiteren kann sie höhenverstellbar sein in einer Aufnahme 28, die unterhalb der Kochfeldplatte 13 montiert ist. Eine solche Höhenverstellbarkeit kann elektromotorisch oder manuell erfolgen, wie dies zuvor erläutert worden ist. Für eine elektromotorische Bewegung kann ein Motor mit einer Getriebestange oder einem ähnlichen Linearantrieb vorgesehen sein. Für eine manuelle Verstellung kann eine Federeinrichtung mit entsprechender Rastung in der Arbeitsposition einerseits und in der Parkposition andererseits vorgesehen sein. In der Parkposition ist die Oberseite 26' gestrichelt dargestellt in etwa auf Höhe der Oberseite der Kochfeldplatte 13 bzw. diese steht nicht oder nur geringfügig über. Die Höhenverstellbarkeit ist durch den Pfeil rechts neben der Projektionsvorrichtung 24 veranschaulicht.

In der Projektionsvorrichtung 24 ist als eingangs genannte erfindungsgemäße Spiegeleinrichtung eine MEMS-Vorrichtung 30 angeordnet. Zu deren Funktionsweise wird auf die WO 2012/166941 A2 verwiesen. In der Praxis wird die MEMS-Vorrichtung 30 bzw. eine Spiegelfläche sehr viel kleiner sein als dargestellt, beispielsweise nur maximal 5 mm groß. In der Regel ist sie auch etwas anders angeordnet bzgl. der Winkelausrichtung. Die hier gewählte Darstellung soll dem grundsätzlichen Verständnis dienen.

Unterhalb der MEMS-Vorrichtung 30 ist ein Projektionskopf 32 angeordnet, der die MEMS-Vorrichtung 30 auch tragen kann. Der Projektionskopf 32 weist einen Temperatursensor 34 auf, vorteilhaft als sogenanntes Thermopile für eine optische Temperaturerkennung mittels Wärmestrahlung bzw. IR-Strahlung. Dies ist aus dem Stand der Technik bekannt. Des Weiteren weist der Projektionskopf 32 drei LED 36 auf, die vorteilhaft in den Farben rot, grün und blau vorgesehen sind zur Erzeugung bzw. Projektion im Wesentlichen beliebiger Farben. Der Projektionskopf 32 wiederum ist auf einem Steuerträger 38 angeordnet bzw. wird von diesem getragen. Vom Steuerträger 38 geht unten eine Anschlussleitung 39 ab zu einer Ansteuerung und Auswertung. Ausgewertet wird hauptsächlich der Temperatursensor 34. Angesteuert werden die MEMS-Vorrichtung 30 und LED 36.

Wie mittels der Lichtstrahlen 37 in Fig. 1 dargestellt ist, wird Licht bzw. IR-Wärmestrahlen von einer Lateralseite 20 des Topfes 19 abgestrahlt und fallen durch ein Fenster 27 im Projektionsgehäuse 25 auf die MEMS-Vorrichtung 30. Diese spiegelt die Wärmestrahlung nach unten zum Temperatursensor 34 und konzentrieren sie dabei, so dass der Temperatursensor 34 relativ klein sein kann. Es können auch noch weitere optische Mittel zur Beeinflussung der Lichtstrahlen 37 vorgesehen sein, beispielsweise weitere Spiegel und/oder Linsen, Prismen odgl.. So ist es auch denkbar, dass der Projektionskopf 32 nicht unterhalb der MEMS-Vorrichtung 30 angeordnet ist, sondern seitlich oder darüber. Theoretisch könnten auch zwei MEMS-Vorrichtungen 30 oder allgemein zwei Spiegeleinrichtungen vorgesehen sein. Für den Temperatursensor 34 ist dies nicht unbedingt notwendig, für die LED 36 jedoch schon.

Lichtstrahlen 37 von den drei LED 36 werden von der MEMS-Vorrichtung 30 wie dargestellt auf die Lateralseite 20 des Topfes 19 projiziert. Dies erfolgt derart, dass es für einen Benutzer sichtbar ist. So kann beispielsweise eine Aktivierung bzw. ein Betrieb einer Heizeinrichtung unterhalb des Topfes 19 bzw. einer entsprechenden Kochstelle 22 angezeigt werden. Des Weiteren können mittels der MEMS-Vorrichtung 30 auch nicht nur einfache Lichterscheinungen dargestellt werden, sondern Symbole, Bilder odgl.. Es könnte auch eine Leistungsstufe auf die Lateralseite 20 projiziert werden. In nochmals weiterer Ausgestaltung könnten sogar weitergehende Informationen unter Umständen sogar Text darauf projiziert werden. Es ist selbstverständlich, dass anstelle von drei LED 36 auch weniger oder mehr vorgesehen sein können.

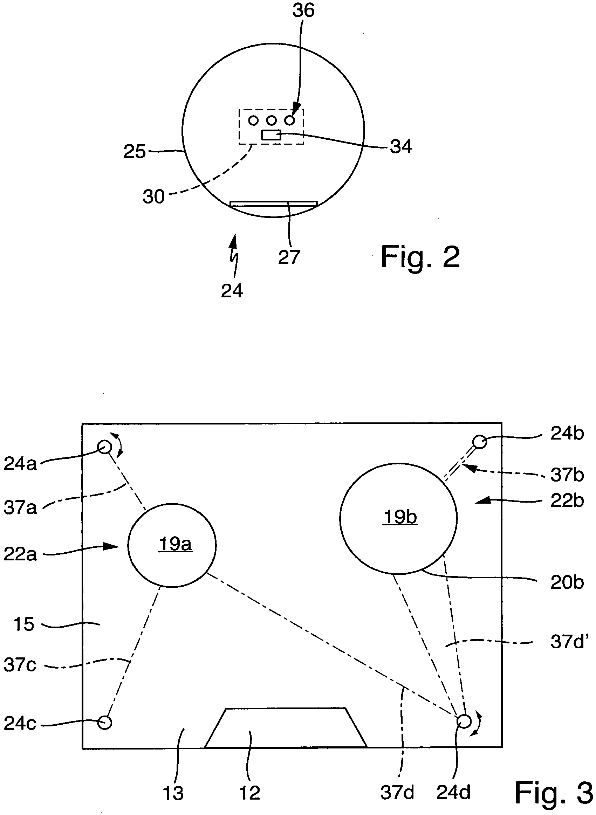

Des Weiteren ist auch leicht vorstellbar, was nachfolgend noch mit Bezug zur Fig. 3 näher erläutert wird, dass Lichtstrahlen von mindestens einer der LED 36 über die MEMS-Vorrichtung 30 abgestrahlt werden können. Von der Lateralseite 20 des Topfes 19 reflektiertes Licht wird wiederum über die MEMS-Vorrichtung 30 auf einen optischen Sensor reflektiert, ggf. auf den Temperatursensor 34.

In der Darstellung der Fig. 2 wird veranschaulicht, wie von oben in einer Reihe die drei LED 36 am Projektionskopf angeordnet sind. Mit geringem Abstand daneben ist der Temperatursensor 34 vorgesehen. Gestrichelt dargestellt ist die MEMS-Vorrichtung 30, die dieses sozusagen überdeckt und vorteilhaft schräg ausgebildet ist, was der Verlauf der Lichtstrahlen 37 aus Fig. 1 vermuten lässt.

In der Fig. 3 ist das Kochfeld 11 von oben dargestellt. In allen vier Eckbereichen sind Projektionsvorrichtungen 24a bis 24d angeordnet. Vorne ist am Kochfeld 11 eine Bedieneinrichtung 12 in einem eigenen Bereich vorgesehen. Diese kann auf an sich bekannte Art und Weise mit Berührungsschaltern bzw. als sogenannte Touchcontrol ausgebildet sein.

Zwei Töpfe 19a und 19b sind auf das Kochfeld 11 im Heizbereich 15 aufgestellt, hier an im Prinzip beliebiger Stelle. Es sind also keine ansonsten üblichen Kochstellenmarkierungen auf der Oberseite der Kochfeldplatte 13 vorgesehen da auch keine fest vorgegebenen Kochstellen definiert sind. Unter der Kochfeldplatte 13 sind mehrere Heizeinrichtungen 17 bzw. eine Vielzahl davon angeordnet, so dass ein Topf 19 an im Prinzip beliebiger Stelle beheizt werden kann.

Im Folgenden soll beschrieben werden, wie gemäß einem ersten erfindungsgemäßen Verfahren mittels der Projektionsvorrichtungen 24 die Positionen der Töpfe 19 erkannt werden können. Wenn beispielsweise der Topf 19a aufgestellt worden ist kann dies das Kochfeld 11 entweder grundsätzlich erkennen oder aber durch eine spezielle Benutzereingabe in einen Such-Modus geschaltet werden. Dann können separate eingangs genannte Topferkennungsmittel eingespart werden. Sämtliche Projektionsvorrichtungen 24a bis 24d beginnen nun, sozusagen das Kochfeld 11 nach Töpfen abzuscannen. Dazu senden sie jeweils einen strichpunktiert dargestellten Lichtstrahl 37 aus, also Lichtstrahlen 37a bis 37d. Dies erfolgt vorteilhaft über den Bereich der gesamten Kochfeldplatte 13. Der Lichtstrahl 37 schwenkt also sozusagen über die Kochfeldplatte 13, wobei dazu nicht unbedingt die Projektionsvorrichtung 24 selbst gedreht werden muss, sondern das Schwenken des Lichtstrahls 37 kann durch die MEMS-Vorrichtung 30 allein erfolgen. Alternativ oder zusätzlich kann natürlich auch die Projektionsvorrichtung 24 gedreht werden, wie dies rechts unten durch den Pfeil bei der Projektionsvorrichtung 24d gezeigt ist. Erkennt eine Projektionsvorrichtung 24 aufgrund eines zurückreflektierten Lichtstrahls 37, dass sie einen Topf 19 sozusagen gefunden hat, gibt sie eine Information über den Winkel dieses Lichtstrahls 37 relativ zum Kochfeld 11 bzw. zur Kochfeldplatte 13 an eine entsprechende Steuerung, beispielsweise eine hier nicht dargestellte Kochfeldsteuerung innerhalb der Bedieneinrichtung 12. Dasselbe wird auch mit den anderen Projektionsvorrichtungen 24c bis 24d gemacht. Aufgrund des aufgestellten zweiten Topfes 19b kann die Projektionsvorrichtung 24b den Topf 19a gar nicht erfassen bzw. anstrahlen. Die Projektionsvorrichtungen 24c und 24d können dies aber und stellen ebenfalls den Winkel ihrer reflektierten Lichtstrahlen 37c und 37d fest. Da bei den runden Töpfen 19 nur in genau einer Winkelstellung Licht mit nennenswerten Anteilen reflektiert wird, kann eine Kochfeldsteuerung aus den Winkeln der drei Lichtstrahlen 37a, 37c und 37d sehr leicht die Position des Mittelpunkts des Topfes 19a feststellen. Im Prinzip würden dazu auch bereits zwei Lichtstrahlen 37 ausreichen, das Verfahren wird aber natürlich sicherer durch die Verwendung von drei solcher Lichtstrahlen 37.

Anstelle einer Winkelmessung bei Reflektionen oder zusätzlich kann auch eine Art Laufzeitmessung erfolgen für das Licht, wie für die Projektionsvorrichtung 24b dargestellt ist, wo der ausgesandte und der zurückreflektierte Lichtstrahl 37b strichpunktiert dargestellt sind. Dazu können entweder Interferenzmuster zwischen verschiedenen Wellenlängen der jeweiligen Lichtstrahlen 37 bzw. der reflektierten Wellenzügen genutzt werden, um die Laufzeiten indirekt zu bestimmen. Alternativ können codierte Lichtsignale verwendet werden. Grundsätzlich kann eine beliebige Methode einer Entfernungsmessung mittels Lichtstrahl und zurückreflektiertem Licht Lichtstrahl verwendet werden. Wird eine solche Laufzeitmessung vorgesehen, für welche die MEMS-Vorrichtung 30 gut verwendet werden kann, so reicht es, wenn ein Topf 19b nur von einer einzigen Projektionsvorrichtung 24b erfasst worden ist. Dann kann allerdings nur im Prinzip ein Punkt auf seiner Lateralseite 20 erfasst werden, weder aber sein Mittelpunkt noch seine Größe. Deswegen wird im Prinzip beides am besten vorteilhaft kombiniert, so dass sämtliche Projektionsvorrichtungen 24 eine Laufzeitmessung zur Entfernungsbestimmung durchführen, wenn sie bei einem bestimmten Winkel ihrer Lichtstrahlen einen Topf erkannt haben.

Für die Projektionsvorrichtung 24d rechts vorne ist auch dargestellt, wie in einer Art aufgefächertem Lichtstrahl 37d' eine erfindungsgemäße Projektion auf eine Lateralseite 20b des Topfes 19b erfolgen kann. So kann beispielsweise einfach eine Lichterscheinung projiziert werden, alternativ eine vorgenannte Information odgl.. Vorteilhaft wird von vorne angeordneten Projektionsvorrichtungen 24 eine solche Lichterscheinung auf die vorderen Lateralseiten 20 der Töpfe 19 projiziert, da dies für einen Benutzer von vorne erkennbar ist. Mit hinten liegenden Projektionsvorrichtungen 24a und 24b kann eine Projektion in Richtung weg von dem Kochfeld 11 nach hinten auf eine dort möglicherweise angeordnete Wand oder sonstige Projektionsfläche erfolgen. So könnten beispielsweise Bilder, bewegte Bilder oder sogar Kochrezepte odgl. groß und gut erkennbar angezeigt werden, die ein Benutzer dann befolgen kann. Dazu sollte eine entsprechende Projektionsvorrichtung 24 drehbar sein, damit sie sowohl nach hinten die genannte Projektion vornehmen kann als auch in Richtung auf das Kochfeld 11 bzw. den Heizbereich 15 zu helfen kann, wie vorbeschrieben aufgestellte Töpfe 19 zu erkennen.

## Patentansprüche

1. Kochfeld mit
- einer Kochfeldplatte,
- mehreren Heizeinrichtungen unter der Kochfeldplatte,
- einer Kochfeldsteuerung,
wobei:
- das Kochfeld mindestens eine Projektionsvorrichtung aufweist, um oberhalb einer Ebene der Kochfeldplatte eine optische Projektion auf eine Lateralseite eines auf die Kochfeldplatte aufgestellten Kochgefäßes zu projizieren,
- die Projektionsvorrichtung ein Projektionsgehäuse aufweist, das in einer Arbeitsposition über die Ebene der Kochfeldplatte nach oben übersteht und eine Spiegeleinrichtung sowie Leuchtmittel aufweist,
- die Spiegeleinrichtung ausgebildet ist, um in der Arbeitsposition von den Leuchtmitteln ausgestrahltes Licht oberhalb der Kochfeldplatte auf die Lateralseite des Kochgefäßes zu projizieren,
- die Spiegeleinrichtung als MEMS-Vorrichtung ausgebildet ist.

2. Kochfeld nach Anspruch 1, **dadurch gekennzeichnet, dass** in der Arbeitsposition die Spiegeleinrichtung im Projektionsgehäuse oberhalb der Ebene der Kochfeldplatte angeordnet ist.

3. Kochfeld nach Anspruch 1 oder 2, **dadurch gekennzeichnet, dass** die Leuchtmittel in dem Projektionsgehäuse unterhalb der Spiegeleinrichtung angeordnet sind, vorzugsweise oberhalb einer Ebene der Kochfeldplatte in der Arbeitsposition.

4. Kochfeld nach einem der vorhergehenden Ansprüche, **dadurch gekennzeichnet, dass** das Projektionsgehäuse drehbar ist mit Drehung des von der Spiegeleinrichtung gespiegelten Lichts der Leuchtmittel an unterschiedliche mögliche Positionen für ein Kochgefäß auf der Kochfeldplatte.

5. Kochfeld nach einem der vorhergehenden Ansprüche, **dadurch gekennzeichnet, dass** unterhalb der Spiegeleinrichtung ein Temperaturerfassungsmittel vorgesehen ist zur optischen Temperaturerfassung, vorzugsweise mittels eines IR-Sensors, um in der Arbeitsposition von einer Lateralseite eines auf die Kochfeldplatte aufgestellten Kochgefäßes abgestrahlte Wärmestrahlung über die Spiegeleinrichtung an das Temperaturerfassungsmittel zu spiegeln zur Erfassung der Temperatur der Lateralseite des Kochgefäßes bzw. des Kochgefäßes an sich.

6. Kochfeld nach einem der vorhergehenden Ansprüche, **dadurch gekennzeichnet, dass** es mehrere Projektionsvorrichtungen aufweist, vorzugsweise bei einem rechteckigen Kochfeld jeweils mindestens eine Projektionsvorrichtung in jedem der beiden hinteren Eckbereiche, insbesondere auch jeweils eine Projektionsvorrichtung in jedem der beiden vorderen Eckbereiche.

7. Kochfeld nach einem der vorhergehenden Ansprüche, **dadurch gekennzeichnet, dass** das Projektionsgehäuse höhenverstellbar ist zwischen der Arbeitsposition, in der das Projektionsgehäuse über die Ebene der Kochfeldplatte nach oben steht, und einer Parkposition, in der das Projektionsgehäuse nicht über diese Ebene übersteht und vorzugsweise oberflächenbündig mit der Kochfeldplatte ist.

8. Verfahren zur Positionserfassung eines Kochgefäßes auf einem Kochfeld nach einem der vorhergehenden Ansprüche, mit den Schritten:
- Licht wird von den Leuchtmitteln über die Spiegeleinrichtung ausgestrahlt oberhalb der Kochfeldplatte,
- das Licht wird von einer Lateralseite eines auf die Kochfeldplatte aufgestellten Kochgefäßes reflektiert,
- das reflektierte Licht trifft auf die Spiegeleinrichtung und wird gespiegelt zu einem Lichtsensor in der Projektionsvorrichtung,
- mittels einer Laufzeitmessung für Licht wird eine Entfernung zu dem Kochgefäß ermittelt,
- dies wird für ein Kochfeld mittels mehrerer unterschiedlicher Projektionsvorrichtungen durchgeführt,
- daraus wird über eine Entfernungsmessung die Position des Kochgefäßes auf der Kochfeldplatte ermittelt.

9. Verfahren zur Positionserfassung eines Kochgefäßes auf einem Kochfeld nach einem der vorhergehenden Ansprüche, mit den Schritten:
- Licht wird von den Leuchtmitteln über die Spiegeleinrichtung ausgestrahlt oberhalb der Kochfeldplatte,
- das Licht wird von einer Lateralseite eines auf die Kochfeldplatte aufgestellten Kochgefäßes reflektiert,
- das reflektierte Licht trifft auf die Spiegeleinrichtung und wird gespiegelt zu einem Lichtsensor in der Projektionsvorrichtung,
- mittels einer Winkelmessung wird der Winkel des Lichts zu dem Kochgefäß ermittelt,
- dies wird für ein Kochfeld mittels mehrerer unterschiedlicher Projektionsvorrichtungen durchgeführt
- daraus wird über eine Triangulation die Position des Kochgefäßes auf der Kochfeldplatte ermittelt.

10. Verfahren nach Anspruch 8 oder 9, **dadurch gekennzeichnet, dass** das Projektionsgehäuse oder die Spiegeleinrichtung gedreht wird zur Ausrichtung der von der Spiegeleinrichtung abgestrahlten Lichtstrahlen in eine Richtung einer erkannten Position eines Kochgefäßes auf der Kochfeldplatte, wobei diese Position des Kochgefäßes durch separate Topferkennungsmittel am Kochfeld erkannt worden ist.

11. Verfahren zur Projektion von Licht auf ein Kochgefäß auf einem Kochfeld nach einem der Ansprüche 1 bis 7, mit den Schritten:
- die Projektionsvorrichtung wird in Richtung auf das auf die Kochfeldplatte aufgestellte Kochgefäß ausgerichtet,
- Licht wird von den Leuchtmitteln an der Spiegeleinrichtung reflektiert und aus der Projektionsvorrichtung oberhalb der Kochfeldplatte auf die Lateralseite des Kochgefäßes ausgestrahlt.

12. Verfahren zur Projektion von Licht auf eine Projektionsfläche hinter einem Kochfeld nach einem der Ansprüche 1 bis 7, mit den Schritten:
- die Projektionsvorrichtung wird in Richtung auf Projektionsfläche ausgerichtet,
- Licht wird von den Leuchtmitteln an der Spiegeleinrichtung reflektiert und aus der Projektionsvorrichtung oberhalb der Kochfeldplatte ausgestrahlt auf die Projektionsfläche.

13. Verfahren nach Anspruch 11 oder 12, **dadurch gekennzeichnet, dass** die Projektionsvorrichtung selbsttätig ausgerichtet wird auf das Kochgefäß oder auf die Projektionsfläche nachdem diese jeweils erkannt worden sind.
